# EUROPÄISCHE PATENTSCHRIFT

(11) **EP 1 647 517 B1**
(45) Veröffentlichungstag und Bekanntmachung des Hinweises auf die Patenterteilung: **25.07.2007**
(21) Anmeldenummer: 04024411.3
(22) Anmeldetag: 13.10.2004
(51) Int. Cl.: B66F 9/12, B60M 1/28, H02G 1/02

(54) **Arbeitskorb**
Working platform
Nacelle de travail

(43) Veröffentlichungstag der Anmeldung: 19.04.2006
(73) Patentinhaber: Palfinger AG, A-5101 Bergheim (AT)
(72) Erfinder: Schwaighofer, Bernhard, 5110 Oberndorf (AT)
(74) Vertreter: Hofinger, Stephan

(56) Entgegenhaltungen:
- EP-A- 0 557 685
- EP-A- 1 215 074
- FR-A- 2 788 508

## Beschreibung

Die vorliegende Erfindung betrifft einen Arbeitskorb mit einer Tragsäule, einer Bodenplatte sowie mindestens einem Handlauf, wobei die Bodenplatte und der Handlauf an die Tragsäule heranschwenkbar sind.

Ein solcher Arbeitskorb ist beispielsweise aus der EP 0 557 685 A2 bekannt. Der dort beschriebene Arbeitskorb ist Teil eines Hubwagens und umfasst eine Stütze sowie eine an der Stütze verschwenkbar angeordnete Bodenplatte und einen ebenfalls an der Stütze schwenkbar gelagerten Handlauf.

Weiters sind Arbeitskörbe bekannt, die verwendet werden, um an der Spitze eines Kranauslegers Personen transportieren zu können. Aufgabe dieser Personen kann es beispielsweise sein, hochgelegene Straßenbeleuchtungen zu warten, Oberleitungseinrichtungen der Bahn zu reparieren oder auch Fassaden zu streichen. Oberstes Gebot ist es in diesem Zusammenhang, die Person oder Personen im Arbeitskorb optimal zu sichern, um dadurch das Absturzrisiko zu minimieren.

Solche Arbeitskörbe weisen unter diesem Aspekt den Nachteil auf, dass der etwa in Bauchhöhe angeordnete Handlauf unterbrochen und partiell aufschwenkbar ist. Dies kann einerseits zur Folge haben, dass der aufgeklappte Handlaufabschnitt nach dem Besteigen des Arbeitskorbes versehentlich nicht geschlossen wird. Andererseits bewirkt die Unterbrechung des Handlaufs eine Verringerung der Stabilität des Arbeitskorbes insgesamt.

Eine Aufgabe der vorliegenden Erfindung besteht darin, einen Arbeitskorb für einen Kran zu schaffen, der unter Vermeidung der vorbeschriebenen Nachteile eine für Transportzwecke möglichst kompakte Lösung darstellt und zudem geeignet ist, die einschlägigen Vorschriften zu erfüllen.

Erfindungsgemäß wird diese Aufgabe dadurch gelöst, dass die Tragsäule über ein Verbindungselement mit einem Kranausleger verbindbar ist, wobei zwischen dem Verbindungselement und der Tragsäule ein Schwenkgelenk angeordnet und das Verbindungselement an die Tragsäule heranschwenkbar ist.

Dadurch kann bei Kränen, die nicht dauerhaft mit einem Arbeitskorb verbunden sind, der Arbeitskorb möglichst kompakt zusammengelegt und dadurch im Kranfahrzeug verstaut werden.

Zudem ist durch die Anordnung des Schwenkgelenkes sichergestellt, dass sich der Arbeitskorb unter dem Einfluss der Schwerkraft selbst nivelliert.

Ist der Handlauf zum Ein- und Ausstieg an die Tragsäule nach oben heranschwenkbar, kann die zu transportierende Person vor der Bodenplatte stehend den Handlauf nach oben schwenken, dann die Bodenplatte besteigen und anschließend den Handlauf über den eigenen Kopf und Oberkörper herunterklappen. Dieses Herunterklappen erfolgt unter dem Einfluss der Schwerkraft vorzugsweise selbsttätig, sodass der Handlauf die zu transportierende Person automatisch umschließt.

Eine konstruktiv besonders stabile Lösung ergibt sich, wenn der Handlauf mit einem an der Tragsäule angeordneten Querträger gelenkig verbunden ist.

Dabei ist es für ein optimales Platzangebot im Arbeitskorb günstig, wenn der Handlauf U-förmig gebogen ist.

Die Stabilität wird weiters durch eine einstückige Ausbildung des Handlaufs gefördert.

Neueste Normen sehen neben dem Handlauf zwingend einen Kniebügel vor, um beispielsweise bei Ohnmacht der im Arbeitskorb transportierten Person einen Absturz zu verhindern. Für einen hohen Bedienkomfort ist es in diesem Zusammenhang günstig, wenn der Handlauf mit einem derartigen Kniebügel gekoppelt ist.

Um sicherzustellen, dass der an die Tragsäule herangeschwenkte Handlauf nicht ungebremst in die Ruheposition zurückfällt, ist der Handlauf vorzugsweise mit einem Dämpfungszylinder gekoppelt.

Ein ungewolltes Schwingen des Arbeitskorbes kann durch einen Dämpfungs- und Feststellzylinder zwischen dem Verbindungselement und der Tragsäule vermieden werden, der die Schwingungsbewegung entweder nur dämpft oder bei Bedarf auch unterbindet.

Weitere Merkmale und Einzelheiten der vorliegenden Erfindung ergeben sich aus der nachfolgenden Figurenbeschreibung. Dabei zeigt:
- Fig. 1: den erfindungsgemäßen Arbeitskorb in Arbeitsposition mit heruntergeklapptem Handlauf,
- Fig. 2: eine analoge Ansicht mit bis an die Tragsäule hochgeklapptem Handlauf und
- Fig. 3: den Arbeitskorb in kompakt zusammengelegtem Zustand.

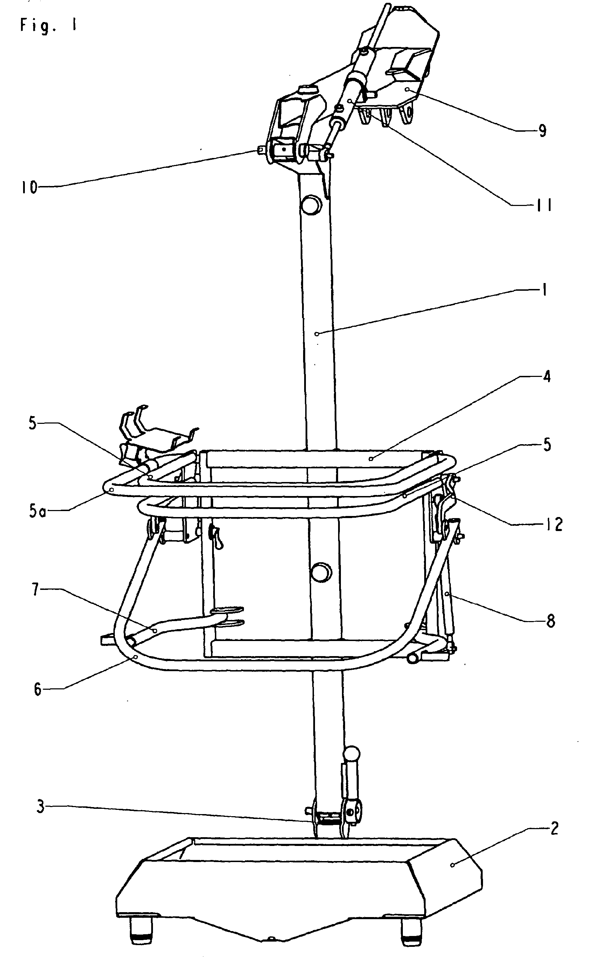

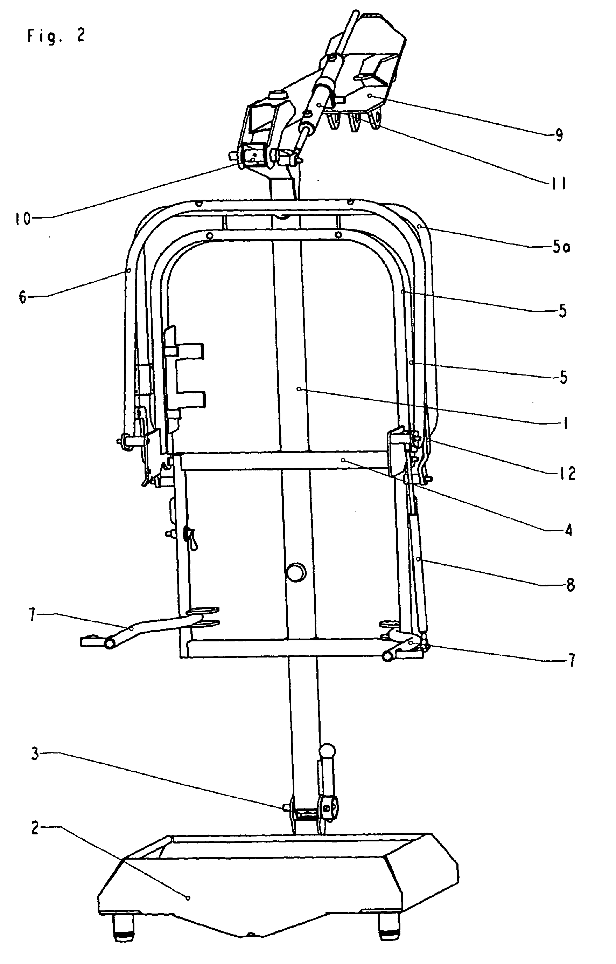

Der erfindungsgemäße Arbeitskorb weist gemäß Fig. 1 und 2 eine Tragsäule 1 auf. Am unteren Ende dieser Tragsäule 1 ist über ein arretierbares Gelenk 3 eine Bodenplatte 2 an der Tragsäule 1 befestigt. Die Bodenplatte 2 weist einen umlaufenden Rahmen auf, um den Absturz von auf der Bodenplatte 2 gelagertem Werkzeug zu verhindern.

Wesentlich für die Sicherheit der arbeitenden Person ist die Anordnung des Handlaufs 5, der beim gezeigten Ausführungsbeispiel doppelt ausgebildet ist. Der Handlauf 5, der im Wesentlichen U-förmig ausgebildet ist, schließt mit seinen Enden gelenkig am Querträger 4 an. Der Querträger 4 ist mit der Tragsäule 1 verschweißt. Beide Handläufe 5 können gemeinsam an die Tragsäule 1 herangeschwenkt werden, um den Einstieg der arbeitenden Person zu ermöglichen. Eine Koppel 12 stellt dabei sicher, dass beim Einstieg der arbeitenden Person auch der Kniebügel 6 hochgeht (entsprechend Fig. 2) und gemeinsam mit den Handläufen 5 sich über der dann auf der Bodenplatte 2 stehenden Person wieder absenkt. Zur Dämpfung des Absenkvorgangs ist ein Dämpfungszylinder 8 vorgesehen.

Auf Kniehöhe seitlich ausschwenkbar sind zusätzlich zwei Kniebügel 7, die ein seitliches Herausfallen einer ohnmächtigen Person aus dem Arbeitskorb verhindern.

Der obere Handlauf 5 weist einen Handlaufschutz 5a auf. Der Handlaufschutz 5a verhindert, dass eine den Handlauf 5 umgreifende Hand der arbeitenden Person gequetscht wird, sofern der Arbeitskorb an einem Hindernis anstößt.

Die Verbindung der Tragsäule 1 mit dem Kranausleger erfolgt über ein Verbindungselement 9. Zwischen der Tragsäule 1 und dem Verbindungselement 9 befindet sich ein Schwenkgelenk 10, das sicherstellt, dass sich der Arbeitskorb unter dem Einfluss der Schwerkraft selbst nivelliert. Das Schwenkgelenk 10 liegt über der Kopfhöhe der arbeitenden Person und damit weit oberhalb des Schwerpunkts, sodass sich der Arbeitskorb auch bei einseitiger Belastung nur geringfügig (maximal 5 Grad bei Normbelastung) neigt. Durch den zwischen der Tragsäule 1 und dem Verbindungselement 9 vorgesehenen Dämpfungs- und Feststellzylinder 12 wird einerseits ein ständiges Pendeln des Arbeitskorbes durch Dämpfung unterbunden und im Bedarfsfall die Möglichkeit geschaffen, die Relativbewegung zwischen den beiden Teilen überhaupt zu blockieren.

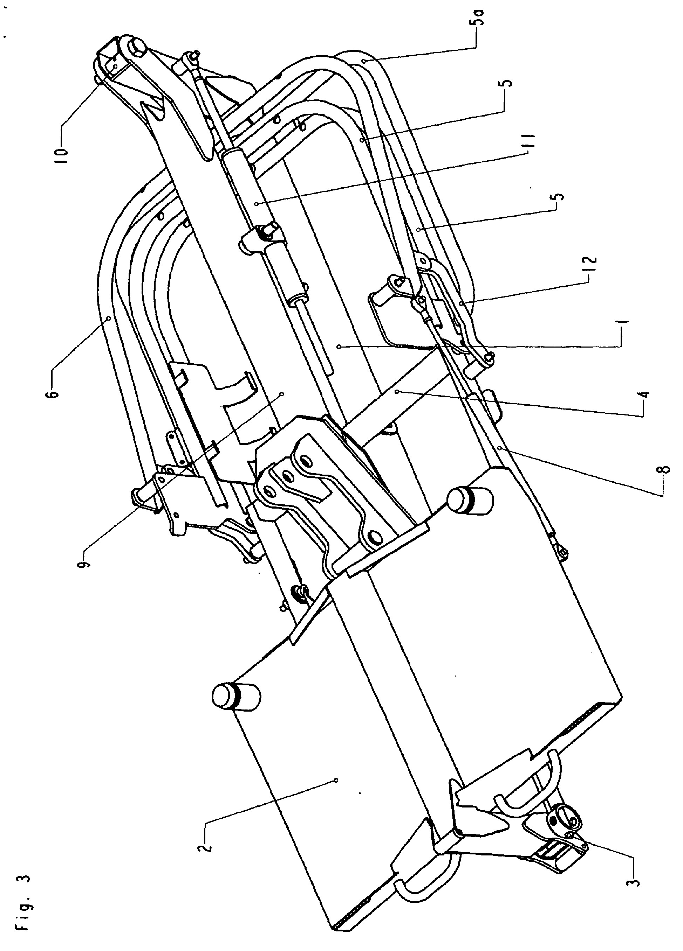

In Fig. 3 ist der Arbeitskorb schließlich in kompakt zusammengelegter Form gezeigt, in der er am Kranfahrzeug verstaut werden kann. Hochgeklappt sind einerseits die Bodenplatte 2 und andererseits die Handläufe 5 mit dem daran gekoppelten Kniebügel 6. Das Verbindungselement 9 ist ebenfalls umgelegt, um die Außenabmessungen zu minimieren.

## Patentansprüche

1. Arbeitskorb mit einer Tragsäule (1), einer Bodenplatte (2) sowie mindestens einem Handlauf (5), wobei die Bodenplatte (2) und der Handlauf (5) an die Tragsäule (1) heranschwenkbar sind, **dadurch gekennzeichnet, dass** die Tragsäule (1) über ein Verbindungselement (9) mit einem Kranausleger verbindbar ist, wobei zwischen dem Verbindungselement (9) und der Tragsäule (1) ein Schwenkgelenk (10) angeordnet und das Verbindungselement (9) an die Tragsäule (1) heranschwenkbar ist.

2. Arbeitskorb nach Anspruch 1, **dadurch gekennzeichnet, dass** der Handlauf (5) zum Ein- oder Ausstieg einer arbeitenden Person an die Tragsäule (1) nach oben heranschwenkbar ist und aus seiner an die Tragsäule (1) herangeschwenkten Stellung selbsttätig herunterklappt.

3. Arbeitskorb nach Anspruch 2, **dadurch gekennzeichnet, dass** der Handlauf (5) unter dem Einfluss der Schwerkraft herunterklappt und auf diese Weise die zu transportierende Person automatisch umschließt.

4. Arbeitskorb nach einem der Ansprüche 1 bis 3, **dadurch gekennzeichnet, dass** der Handlauf (5) mit einem an der Tragsäule (1) angeordneten Querträger (4) gelenkig verbunden ist.

5. Arbeitskorb nach einem der Ansprüche 1 bis 4, **dadurch gekennzeichnet, dass** der Handlauf (5) mit einem Kniebügel (6) gekoppelt ist.

6. Arbeitskorb nach einem der Ansprüche 1 bis 5, **dadurch gekennzeichnet, dass** der Handlauf (5) U-förmig gebogen ist.

7. Arbeitskorb nach einem der Ansprüche 1 bis 6, **dadurch gekennzeichnet, dass** der Handlauf (5) einstückig ausgebildet ist.

8. Arbeitskorb nach einem der Ansprüche 1 bis 7, **dadurch gekennzeichnet, dass** der Handlauf (5) mit einem Dämpfungszylinder (8) gekoppelt ist.

9. Arbeitskorb nach einem der Ansprüche 1 bis 8, **dadurch gekennzeichnet, dass** zwei parallele Handläufe (5) vorgesehen sind.

10. Arbeitskorb nach einem der Ansprüche 1 bis 9, **dadurch gekennzeichnet, dass** zwischen dem Verbindungselement (9) und der Tragsäule (1) und ein Dämpfungs- und Feststellzylinder (11) angeordnet ist.

## Claims

1. A work basket comprising a support column (1), a floor plate (2) and at least one handrail (5), wherein the floor plate (2) and the handrail (5) are pivotable to the support column (1), **characterised in that** the support column (1) can be connected to a crane jib by way of a connecting element (9), wherein a pivot joint (10) is arranged between the connecting element (9) and the support column (1) and the connecting element (9) is pivotable to the support column (1).

2. A work basket according to claim 1 **characterised in that** for a working person to climb in or out the handrail (5) is pivotable upwardly to the support column (1) and hinges down automatically out of its position of being pivoted to the support column (1).

3. A work basket according to claim 2 **characterised in that** the handrail (5) hinges down under the influence of the force of gravity and **in that** way automatically surrounds the person to be transported.

4. A work basket according to one of claims 1 to 3 **characterised in that** the handrail (5) is hingedly connected to a transverse carrier (4) arranged on the support column (1).

5. A work basket according to one of claims 1 to 4 **characterised in that** the handrail (5) is connected to a knee hoop (6).

6. A work basket according to one of claims 1 to 5 **characterised in that** the handrail (5) is curved in a U-shape.

7. A work basket according to one of claims 1 to 6 **characterised in that** the handrail (5) is formed in one piece.

8. A work basket according to one of claims 1 to 7 **characterised in that** the handrail (5) is coupled to a damping cylinder (8).

9. A work basket according to one of claims 1 to 8 **characterised in that** there are provided two parallel handrails (5).

10. A work basket according to one of claims 1 to 9 **characterised in that** a damping and locking cylinder (11) is arranged between the connecting element (9) and the support column (1).

## Revendications

1. Nacelle de travail comprenant une colonne portante (1), une plaque de fond (2) ainsi qu'au moins une main courante (5), la plaque de fond (2) et la main courante (5) pouvant être basculées en se rapprochant de la colonne portante (1), **caractérisée en ce que** la colonne portante (1) peut être reliée par un élément de liaison (9) à une flèche de grue, **en ce qu'**une articulation pivotante (10) est disposée entre l'élément de liaison (9) et la colonne portante (1) et, l'élément de liaison (9) peut être basculé en se rapprochant de la colonne portante (1).

2. Nacelle de travail selon la revendication 1, **caractérisée en ce que** la main courante (5) peut être basculée vers le haut en se rapprochant de la colonne portante (1) pour la montée ou la descente d'une personne qui travaille et est rabattue vers le bas automatiquement à partir de sa position basculée en se rapprochant de la colonne portante (1).

3. Nacelle de travail selon la revendication 2, **caractérisée en ce que** la main courante (5) bascule vers le bas sous l'effet de la force de gravité et entoure automatiquement de cette façon la personne à transporter.

4. Nacelle de travail selon l'une quelconque des revendications 1 à 3, **caractérisée en ce que** la main courante (5) est reliée de manière articulée à une traverse (4) disposée sur la colonne portante (1).

5. Nacelle de travail selon l'une quelconque des revendications 1 à 4, **caractérisée en ce que** la main courante (5) est couplée à un étrier à coude (6).

6. Nacelle de travail selon l'une quelconque des revendications 1 à 5, **caractérisée en ce que** la main courante (5) est pliée en forme de U.

7. Nacelle de travail selon l'une quelconque des revendications 1 à 6, **caractérisée en ce que** la main courante (5) est réalisée d'une seule pièce.

8. Nacelle de travail selon l'une quelconque des revendications 1 à 7, **caractérisée en ce que** la main courante (5) est couplée avec un cylindre d'amortissement (8).

9. Nacelle de travail selon l'une quelconque des revendications 1 à 8, **caractérisée en ce que** deux mains courantes (5) parallèles sont prévues.

10. Nacelle de travail selon l'une quelconque des revendications 1 à 9, **caractérisée en ce qu'**un cylindre d'amortissement et de blocage (11) est disposé entre l'élément de liaison (9) et la colonne portante (1).
